**Europäisches Patentamt**

**European Patent Office**

**Office européen des brevets**

(19)

(11) Veröffentlichungsnummer: **0 031 413**
**B1**

(12)

# EUROPÄISCHE PATENTSCHRIFT

(45) Veröffentlichungstag der Patentschrift:
21.09.83

(51) Int. Cl.³: **F 16 C 7/02**

(21) Anmeldenummer: 80106507.9

(22) Anmeldetag: 24.10.80

(54) **Pleuelstange für Kraftmaschinen.**

(30) Priorität: **19.12.79 DE 2951112**

(43) Veröffentlichungstag der Anmeldung:
**08.07.81 Patentblatt 81/27**

(45) Bekanntmachung des Hinweises auf die Patenterteilung:
**21.09.83 Patentblatt 83/38**

(84) Benannte Vertragsstaaten:
**BE FR GB IT SE**

(56) Entgegenhaltungen:
**EP-A-18 475**
**DE-A-2 360 410**
**GB-A-1 162 022**
**GB-A-1 364 317**
**US-A-3 262 335**
**US-A-3 411 379**

(73) Patentinhaber: **Messerschmitt-Bölkow-Blohm**
**Gesellschaft mit beschränkter Haftung,**
**Postfach 801109, D-8000 München 80 (DE)**

(72) Erfinder: **Bongers, Bernd, Dipl.Ing., Nelkenweg 2,**
**D-8011 Kirchheim (DE)**

ACTORUM AG

Pleuelstange für Kraftmaschinen

Die Erfindung geht aus von einer Pleuelstange der im Oberbegriff des Anspruchs 1 angegebenen und durch die GB-A-1 364 317 bekanntgewordenen Art. Bei dieser bekannten Pleuelstange sind die Lagerschalen durch zwei im Abstand voneinander angeordnete Gurtstränge aus faserverstärktem Kunststoff miteinander verbunden. Die Gurtstränge umschliessen die Lagerschale für den Kolbenbolzen, wobei sie in zwei in ein metallenes Kolbenbolzenauge eingelassene Kanäle geführt sind und sind in der unteren Hälfte des Kurbelwellenlagers ebenfalls in Kanälen geführt. Diese Anordnung hat die Nachteile, dass eine Verbindung der Gurtstränge aus faserverstärktem Werkstoff mit den Metallteilen schwierig ist und dass die Gurtstränge alleine die auftretenden Biege- und Druckkräfte nicht übertragen können. Die durch die DE-A-2 360 410 bekannte Pleuelstange besteht ausser den Lagerschalen vollkommen aus faserverstärktem Kunststoff und vermeidet somit den Nachteil der Verbindung von unterschiedlichen Werkstoffen. Die Pleuelstange wird dabei aus einem glasfaserverstärktem warmfesten Polyamid in einer entsprechenden Form gespritzt, wobei der Glasfaseranteil vorzugsweise 30% beträgt. Für die Aufnahme der hauptsächlich auf eine Pleuelstange einwirkenden kombinierten Druck- und Biegekräfte ist diese Bauart nicht geeignet, weil faserverstärkter Kunststoff mit einem so geringen, aus nicht gerichteten Fasern bestehendem Glasfaseranteil nur beschränkt auf Druck und Biegung belastbar ist und bereits bei verhältnismässig geringen kombinierten Lasten ausknickt und dabei zerfasert. Durch die EP-A-18 475 (Priorität: 26.04.79, veröffentlicht: 12.11.80) ist zwar bereits eine Pleuelstange bekannt, deren Schaft durch ein zwischen Faatssträngen angeordnetes ebenfalls aus faserverstärktem Kunststoff bestehendes Druckteil die erforderlichen Druck- und Biegekräfte aufnehmen kann. Diese Pleuelstange ist jedoch Teil eines mit dem Kolben unmittelbar verbundenen, die Auslenkung zwischen Kolben und Kurbelwellenbewegung in einem Gelenkpunkt elastisch aufnehmenden Pleuelelements. Die Faserstränge laufen dabei um das Kurbelwellenlager herum, vereinigen sich in dem Gelenkpunkt zu einem Faserstrang, dessen Enden im Kolben aufgespleisst und dort mit Kunstharz eingegossen sind. Diese kombinierte Einrichtung aus Kolben und Pleuelstange ist somit nicht mit der der Erfindung zugrundeliegenden Pleuelstange mit zwei Lagerschalen vergleichbar.

Es ist Aufgabe der Erfindung, eine Pleuelstange der eingangs genannten Art so auszubilden, dass alle auf sie einwirkenden Druck- und Biegekräfte auch bei hohen Beanspruchungen ohne Deformierung aufgenommen werden können.

Diese Aufgabe wird erfindungsgemäss mit den Merkmalen des kennzeichnenden Teils von Anspruch 1 gelöst. Vorteilhafte Weiterbildungen der Erfindung enthalten die Ansprüche 2 bis 5.

Die erfindungsgemässe Pleuelstange kann gegenüber den zum Stand der Technik genannten Ausführungen wesentlich höher und bei erheblich niedrigerem Gewicht als bisher gebräuchliche Stahlpleuelstangen gleich hoch wie diese belastet werden.

Es werden dabei weitgehend die Werkstoffeigenschaften und die Fertigungsmöglichkeiten von faserverstärktem Kunststoff zu einer Pleuelkonstruktion genutzt, die es gestattet, auch höchste Beanspruchungen, insbesondere die kombinierten Druck- und Biegebeanspruchungen sehr günstig in die Verstärkungsfasern einzuleiten.

Die Merkmale der Erfindung und deren technische Vorteile ergeben sich aus der Beschreibung eines Ausführungsbeispiels anhand der Zeichnung.

Es zeigen :

Fig. 1 die Seitenansicht eines Pleuels;

Fig. 2 einen Schnitt durch das Pleuel entsprechend den Linien II-II der Fig. 1;

Fig. 3 die Seitenansicht von in das Pleuel eingebauten Druckstücken und

Fig. 4 die Seitenansicht von in das Pleuel eingebauten Platten.

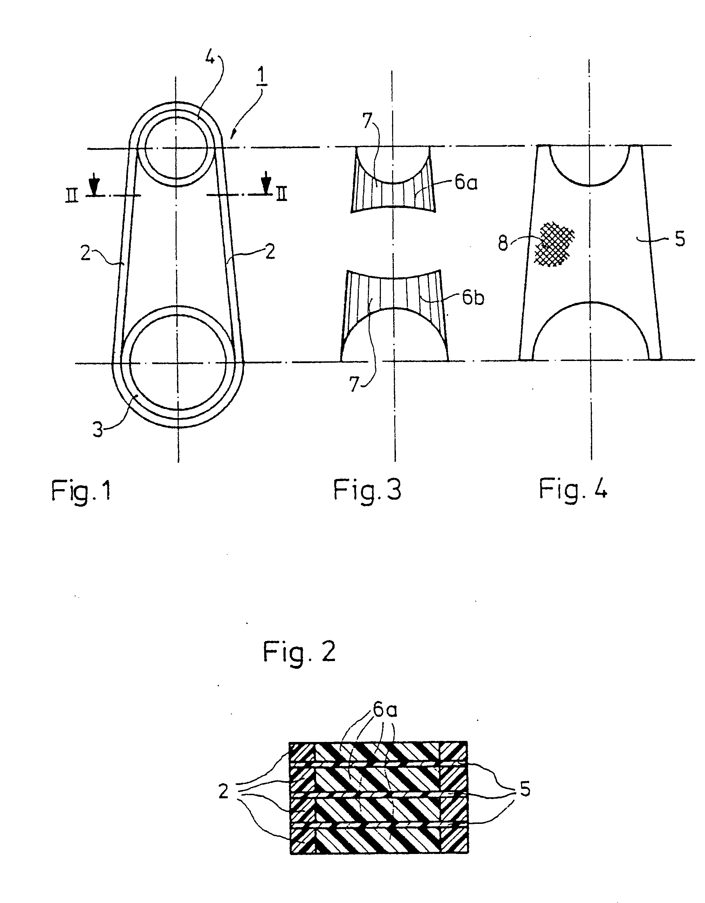

Ein in den Figuren dargestelltes Pleuel 1 weist endlose Gurtstränge 2 auf, die um eine Lagerschale 3 für ein Kurbelwellenlager und eine Lagerschale 4 für einen Kolbenbolzen herumgeführt sind und auf diesen aufliegen. Zwischen den einzelnen Gurtsträngen sind Lagerplatten 5 eingesetzt, die entsprechend Fig. 4 zwischen den Mitten der Lagerschalen 3 und 4 angeordnet sind. Innerhalb der Gurtstränge 2 und den Platten 5 sind Druckstöcke 6a und 6b eingebaut, die entsprechend Fig. 3 nicht den gesamten Raum zwischen den Lagerschalen 3 und 4 einnehmen brauchen.

Die Gurtstränge 2, Platten 5 und Druckstücke 6a und 6b sind aus faserverstärktem Kunststoff gefertigt. Die Gurtstränge 2 sind im Wickelverfahren um die Lagerschalen 3 und 4 herumgewickelt und dienen zur Aufnahme der auftretenden Zugkräfte. Die Druckkräfte werden von den Lagerschalen 3 und 4 direkt auf die Druckstücke 6a und 6b übertragen, die mit unidirektionalen, in Längsrichtung des Pleuels 1 angeordneten Fasern 7 versehen sind.

In der Fig. 3 ist die Richtung der Fasern 7 angedeutet. Bei sehr hoch beanspruchten Pleueln können die Druckstücke auch zwischen den Lagerschalen 3 und 4 durchlaufen. Die Platten 5 weisen vorzugsweise mit unter 45° zur Pleuelachse kreuzende Fasern auf, wie es in Fig. 4 in einem Ausschnitt 8 angedeutet ist. Dadurch können die Platten 5 die Druckkräfte aus den Druckstücken 6a und 6b in die zeitlichen Gurtstränge 2 sicher übertragen. Durch den dargestellten, vielschichtigen Aufbau des Pleuels 1 sind genügend grosse Klebeflächen vorhanden, um die Kräfte und Biegebeanspruchungen aufnehmen und übertragen zu können.

Das Pleuel 1 kann nicht nur für teilbare Kurbelwellen angewendet werden. Bei ungeteilten Kurbelwellen können die Pleuel direkt mit der Kurbelwelle integriert werden, indem die Platten 5 mit den Druckstücken 6a und 6b vorgefertigt, zusammen mit den Lagerschalen 3 und 4 auf der Kurbelwelle fixiert und dann zur Bildung der Gurtstränge 2 umwickelt werden. Dadurch befinden sich nach dem Aushärten die fertigen Pleuel bereits auf der Kurbelwelle.

**Patentansprüche**

1. Pleuelstange für Kraftmaschinen aus faserverstärktem Kunststoff mit zwei Lagerschalen für einen Kolbenbolzen und eine Kurbelwelle und mit zumindest um die Lagerschale für den Kolbenbolzen herumgeführten Gurten aus Fasersträngen, dadurch gekennzeichnet, dass die Gurte durch mehrere, mit Abstand nebeneinander parallel verlaufende Gurtstränge (2) gebildet sind, die auch um die Lagerschale (3) für das Kurbelwellenlager herumgeführt sind und dass zwischen den Gurtsträngen die Pleuelbreite einnehmende Platten (5) sowie zwischen den Gurtsträngen und den Platten Druckstücke (6a, 6b) eingesetzt sind, wobei die Platten und Druckstücke an den Lagerschalen (3, 4) anliegen.

2. Pleuelstange nach Anspruch 1, dadurch gekennzeichnet, dass die Gurtstränge (2) mit Endlosfasern um die Lagerschalen (3, 4) gewickelt sind.

3. Pleuelstange nach Anspruch 1, dadurch gekennzeichnet, dass die Platten (5) mit kreuzweise aufgebrachten Faserlagen, vorzugsweise unter +45° zur Achse der Pleuelstange (1) gefertigt sind.

4. Pleuelstange nach Anspruch 1, dadurch gekennzeichnet, dass die Druckstücke (6a, 6b) mit parallel zur Längsachse des Pleuels verlaufenden, unidirektionalen Fasern gefertigt sind.

5. Pleuelstange nach Anspruch 4, dadurch gekennzeichnet, dass die Druckstücke (6a, 6b) nicht den gesamten Raum zwischen den Lagerschalen (3, 4) einnehmen.

**Revendications**

1. Bielle pour machines motrices en matière plastique renforcée de fibres avec deux coussinets pour un pied de bielle et une tête de bielle et comportant des ceintures formées de brins de fibres et passant au moins autour du coussinet pour le pied de bielle, caractérisée par le fait que les ceintures sont formées par plusieurs brins (2) disposés parallèlement à distance les uns à côté des autres et passant aussi autour du coussinet (3) du palier de tête de bielle et qu'entre les brins sont insérées des plaques (5) occupant toute la largeur de la bielle et, entre les brins et les plaques, des éléments de pression (6a, 6b), les plaques et les éléments de pression venant s'appliquer sur les coussinets (3, 4).

2. Bielle selon la revendication 1, caractérisée par le fait que les brins de la ceinture sont formés de fibres sans fin enroulées autour des coussinets (3, 4).

3. Bielle selon la revendication 1, caractérisée par le fait que les plaques (5) sont réalisées avec des couches de fibres appliquées en croix, de préférence à +45° par rapport à l'axe de la bielle (1).

4. Bielle selon la revendication 1, caractérisée par le fait que les éléments de pression (6a, 6b) sont réalisés avec des fibres unidirectionnelles disposées parallèlement à l'axe longitudinal de la bielle.

5. Bielle selon la revendication 4, caractérisée par le fait que les éléments de pression (6a, 6b) n'occupent pas la totalité de l'espace compris entre les coussinets (3, 4).

**Claims**

1. A connecting rod for power engines made of fibre-reinforced plastics material, having two bearing bushes for a piston pin and a crankshaft, and comprising belts which are made of fibre strands and which extend at least around the bearing bush for the piston pin, characterised in that the belts are formed by several belt strands (2) which extend parallel to each other and are side-by-side with each other and which also extend around the bearing bush (3) for the crankshaft bearing, and in that plates (5) occupying the width of the connecting rod are inserted between the belt strands and thrust pieces (6a, 6b) are inserted between the belt strands an the plates, in which respect the plates and thrust pieces butt against the bearing bushes (3, 4).

2. A connecting rod in accordance with claim 1, characterised in that the belt strands (2) are wound as endless fibres around the bearing bushes (3, 4).

3. A connecting rod in accordance with claim 1, characterised in that the plates (5) consist of fibre layers which extend crosswise, preferably at +45° to the axis of the connecting rod (1).

4. A connecting rod in accordance with claim 1, characterised in that the thrust pieces (6a, 6b) are in the form of unidirectional fibres extending parallel to the longitudinal axis of the connecting rod.

5. A connecting rod in accordance with claim 4, characterised in that the thrust pieces (6a, 6b) do not occupy the entire space between the bearing bushes (3, 4).

Fig.1

Fig.3

Fig. 4

Fig. 2